(19) Europäisches Patentamt
European Patent Office
Office européen des brevets

(11) EP 1 892 225 A1

(12) # EUROPEAN PATENT APPLICATION

(43) Date of publication:
**27.02.2008 Bulletin 2008/09**

(51) Int Cl.:
***C03C 25/32*** (2006.01) ***C08J 5/08*** (2006.01)
***C08L 77/12*** (2006.01) ***D04H 1/64*** (2006.01)

(21) Application number: **06017563.5**

(22) Date of filing: **23.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Rockwool International A/S**
**2640 Hedehusene (DK)**

(72) Inventor: **Nissen, Povl**
**3650 Olstykke (DK)**

(74) Representative: **Barz, Peter**
**Patentanwalt**
**Kaiserplatz 2**
**80803 München (DE)**

(54) **Aqueous urea-modified binder for mineral fibres**

(57) An aqueous binder composition for mineral fibres comprises:
a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from about 0.6 to about 1.5 and, optionally, treating the reaction product with a base; and
urea in an amount of from about 1 to about 25 wt.%, based on solids of the binder composition;
the alkanolamine, carboxylic anhydride and urea reactants being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\text{min}) = \frac{(\text{NH+OH})}{\text{COOH}} = 0.04 \times \text{wt.\% Urea} + 0.6$$

$$y\ (\text{max}) = \frac{(\text{NH+OH})}{\text{COOH}} = 0.04 \times \text{wt.\% Urea} + 1.5$$

EP 1 892 225 A1

## Description

### Field of the Invention

The present invention relates to an aqueous binder for mineral fibre products exhibiting reduced moisture take-up, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol/formaldehyde resins which can be economically produced and can be extended with urea prior to use as a binder. However, the desire to minimize Volatile Organic Compound (VOC) emissions from products in conjunction with existing and proposed legislation directed to the lowering or elimination of formaldehyde have led to the development of formaldehyde-free binders such as, for instance, the binder compositions based on polycarboxy polymers and polyols, as disclosed in EP-A-583086, EP-A-990727 and US-A-5,318,990.

Another group of non-phenol/formaldehyde binders for mineral fibres are the addition/elimination reaction products of aliphatic and/or aromatic anhyrides with alkanolamines, e.g., as disclosed in WO 99/36368, WO 01/05725, WO 01/96460, WO 02/06178, WO 2004/007615 and WO 2006/061249. These mineral fibre binders are water soluble and exhibit excellent binding properties in terms of curing speed and curing density. Still, the moisture take-up associated with these binders may lead to unsatisfactory mechanical strength of the bonded mineral fibre products, particularly after ageing.

### Summary of the Invention

Accordingly, it was an object of the present invention to provide an aqueous binder composition which is particularly suitable for bonding mineral fibres, which exhibits excellent binding characteristics in terms of curing speed and strength, has good water solubility and dilutability and is capable of providing bonded mineral fibre products exhibiting a reduced moisture take-up and satisfactory mechanical strength, even after ageing.

A further object of the present invention was to provide a mineral fibre product bonded with such a binder composition.

In accordance with a first aspect of the present invention, there is provided an aqueous binder composition comprising

a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from about 0.6 to about 1.5 and, optionally, treating the reaction product with a base; and

urea in an amount of from about 1 to about 25 wt.%, based on solids of the binder composition;

said alkanolamine, carboxylic anhydride and urea being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\text{min}) = \frac{(\text{NH+OH})}{\text{COOH}} = 0.04 \times \text{wt.\% Urea} + 0.6$$

$$y\,(max) = \frac{(NH+OH)}{COOH} = 0.04 \times wt.\%\ Urea + 1.5$$

In accordance with a second aspect of the present invention, there is provided a method of producing a bonded mineral fibre product which comprises the steps of contacting the mineral fibres or mineral fibre product with an aqueous binder composition as defined above, and curing the binder composition.

In accordance with a third aspect of the present invention, there is provided a mineral fibre product comprising mineral fibres in contact with the cured binder composition defined above.

Mineral fibre products produced from the aqueous binder composition according to the present invention exhibit reduced moisture take-up and improved mechanical strength, even after ageing.

**Description of the Preferred Embodiments**

The formaldehyde-free aqueous binder composition according to the present invention comprises

a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from about 0.6 to about 1.5 and, optionally, treating the reaction product with a base; and

urea in an amount of from about 1 to about 25 wt.%, based on solids of the binder composition;

the alkanolamine, carboxylic anhydride and urea reactants being employed in proportions such that the ratio of total equivalents of amine groups plus hydroxy groups (NH+OH), including urea, to equivalents of carboxy groups (COOH) in the binder composition is between and includes the following lower limit x and upper limit y :

$$x\,(min) = \frac{(NH+OH)}{COOH} = 0.04 \times wt.\%\ Urea + 0.6$$

$$y\,(max) = \frac{(NH+OH)}{COOH} = 0.04 \times wt.\%\ Urea + 1.5$$

<u>Binder Component</u>

The binder component of the aqueous binder composition according to the present invention comprises the water-soluble reaction product of an alkanolamine with a carboxylic anhydride.

Preferred alkanolamines for use in the preparation of binder component are alkanolamines having at least two hydroxy groups such as, for instance, alkanolamines represented by the formula

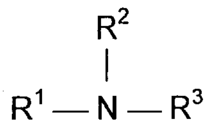

wherein $R^1$ is hydrogen, a $C_{1-10}$ alkyl group or a $C_{1-10}$ hydroxyalkyl group; and $R^2$ and $R^3$ are $C_{1-10}$ hydroxyalkyl groups.

Preferably, $R^2$ and $R^3$, independently are $C_{2-5}$ hydroxyalkyl groups, and $R^1$ is hydrogen, a $C_{1-5}$ alkyl group or a $C_{2-5}$ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preparation of the binder component, the proportion of the alkanolamine and carboxylic anhydride reactants is selected such that the ratio of equivalents of amine plus hydroxy groups (NH+OH), excluding urea, to equivalents of carboxy groups (COOH) is within the range of from 0.6 to 1.5, preferably 0.8 to 1.5 and, more preferably 0.9 to 1.2.

On the other hand, the properties of the final binder composition, such as curing behaviour, durability and moisture take-up are determined by the total ratio of reactive groups present. Therefore, for optimum performance, the alkanolamine, carboxylic anhydride and urea reactants are employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\text{min}) = \frac{(\text{NH+OH})}{\text{COOH}} = 0.04 \text{ x wt.\% Urea} + 0.6$$

$$y\ (\text{max}) = \frac{(\text{NH+OH})}{\text{COOH}} = 0.04 \text{ x wt.\% Urea} + 1.5$$

The reaction between the alkanolamine and carboxylic anhydride reactants is carried out in the usual manner, for instance, as described in WO 99/36368, WO 01/05725, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

Water may be added after the first anhydride has reacted, either together with the second anhydride or before addition of the second anhydride or at the end of the reaction, in an amount to make the binder easily pumpable.

In order to improve the water solubility and dilutability of the binder, a base may be added up to a pH of about 8, preferably a pH of between about 5-8, and more preferably a pH of about 6-7. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia ($NH_3$) and organic amines such as diethanolamine (DEA), triethanolamine (TEA) and dimethylethanolamine (DMEA). The base is preferably added to the reaction mixture after the reaction between the alkanol amine and the carboxylic anhydride(s) has been actively stopped by adding water.

If appropriate, an additional acid monomer may be employed in the reaction and is preferably added to the

reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

Urea

Urea is added to the binder composition obtained in an amount of from about 1 wt.% to about 25 wt.%, preferably about 3 wt.% to 17 wt.%, based on solids of the binder composition, in substance or, preferably, in aqueous solution.

Other Components

The binder composition according to the present invention may comprise one or more conventional binder additives.

These include, for instance, silanes such as, e.g., γ-aminopropyltriethoxysilane, curing accelerators such as, e.g., β-hydroxylalkylamides; the free acid and salt forms of phosphoric acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, phosphonic or phosphinic acid. Other suitable binder additives are thermal stabilizers; UV stabilizers; hydrolytic stability-improving agents such as monoalkanolamines, allylamines, peroxy compounds, epoxy compounds, compounds having at least one long-chain aliphatic moiety and at least one functional group, and SBR latices; surface active agents; fillers such as clay, silicates, and magnesium sulfate; pigments such as titanium dioxide; hydrophobizing agents such as fluorinated compounds, mineral oils and silicone oils; flame retardants; corrosion inhibitors; silica; magnesium hydroxide and others.

These binder additives and adjuvants are used in conventional amounts generally not exceeding 20 % by weight of the binder solids. The amount of curing accelerator in the binder composition is generally between 0.05 to 5 wt.%, based on solids, and also the amount of silanes is generally between 0.05 to 5 wt.%.

If appropriate, co-binders such as, e.g., carbohydrates may be employed in amounts of, for instance, up to 25-30 wt.%, based on binder solids.

Final Binder Composition

The binder composition according to the present invention preferably has a solids content of from 10 to 40 wt.%. This is often the concentration range of the binder in storage containers before use.

In a form ready for application, the binder preferably has a solids content of from 1 to 30 wt.%.

For transportation, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

Mineral fibre product

The formaldehyde-free aqueous binder composition according to the present invention may be applied to mineral fibres or mineral fibre products by conventional techniques such as, e.g., air or airless spraying, rotating disc atomization, padding, saturating, roll coating, curtain coating, beater deposition, or the like.

The mineral fibres may be any of man-made vitreous fibres (MMVF), glass fibres, ceramic fibres, basalt fibres, slag wool, rock wool, stone wool and others. The mineral fibre products are, for instance, woven and nonwoven fabrics, mats, batts, slabs, sheets and other shaped articles which find use, for example, as thermal or acoustical insulation materials, vibration damping, construction materials, facade insulation, reinforcing materials for roofing or flooring applications, as filter stock, as horticultural growing media and in other applications.

For the manufacture of conventional thermal or acoustical insulation products, the binder is normally applied in an amount of 0.1 to 15 %, preferably 0.3-10 %, of the bonded mineral fibre product.

In general, the binder composition is applied, normally by spraying, immediately after fiberization of the mineral melt, whereupon the coated mineral wool is cured in a curing oven wherein heated air is passed through the mineral wool web to cure the binder. Typically, the curing oven is operated at a temperature of from about 200°C to about 350°C. Preferably, the curing temperature ranges from about 225 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation. If desired, the mineral wool web may also be subjected to a shaping process before curing.

The bonded mineral fibre product emerging from the curing oven in the form of e.g. a batt may be cut to a desired format and, if appropriate, compressed for packaging and shipping. It may also be employed as an intermediate for the manufacture of shaped articles and composite materials.

Although the formaldehyde-free aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, molded articles, coatings etc.

The following examples are intended to further illustrate the aqueous binder composition and the use thereof as a binder for mineral fibre products. Parts and percentages are by weight, unless indicated otherwise.

Examples

**Reference Example**

Preparation of binder components A1 to A6

X g of diethanolamine (DEA) is placed in a 1-litre glass reactor provided with an agitator and a heating/cooling jacket. The temperature of the diethanolamine is raised to 60°C whereafter Y1 g of tetrahydrophthalic anhydride (THPA) is added. After raising the temperature to and keeping it at 130°C, a second portion of Y2 g of tetrahydrophthalic anhydride is added, followed shortly by addition of Z g of trimellitic anhydride (TMA).

After reacting for 1 hour, the mixture is cooled to 95°C, W g of water added and the mixture is stirred for 1 hour. After further cooling of the reaction mixture to below 30°C, a binder component A is obtained having an equivalent ratio (NH+OH)/COOH as stated in Table 1 below.

Table 1

| | **A1** | A2 | A3 | A4 | A5 | A6 |
|---|---|---|---|---|---|---|
| (NH+OH)/ COOH | 1.0 | 1.6 | 1.3 | 1.6 | 1.0 | 1.4 |
| DEA (X) | 315 g | 315 g | 315 g | 315 g | 315 g | 315 g |
| THPA (Y1) | 274 g | 115 g | 177 g | 164 g | 183 g | 183 g |
| THPA (Y2) | 119 g | 58 g | 88 g | 82 g | 91 g | 91g |
| TMA (Z) | 248 g | 219 g | 219 g | 156 g | 346 g | 173 g |
| Water (W) | 400 g | 400 g | 400 g | 400 g | 400 g | 400 g |

**Examples 1 to 5**

Preparation of binders Nos. 1-5 according to the present invention

For the preparation of binders Nos. 1-5 according the present invention each of the binder components A1 to A5 is mixed with a binder component B which comprises urea in the amounts given in Table 2 below.

For the preparation of the final binder composition, to each of the compositions Nos. 1-5 is added a curing accelerator (2% based on solids of hypophosphorous acid), a coupling agent (3-aminopropyltriethoxy silane) and ammonia.

Table 2

| Binder No. | Component A Binder from Ref. Example | | Component B Urea | Amount of urea | (NH+OH)/ COOH after urea |
|---|---|---|---|---|---|
| 1 | A1 | 40 g | 4,65 g | 15% | 1.6 |
| 2 | A2 | 40 g | 4,22 g | 15% | 2.3 |
| 3 | A3 | 40 g | 2,76 g | 10% | 1.7 |
| 4 | A4 | 40 g | 1,25 g | 5% | 1.8 |
| 5 | A5 | 40 g | 1,14 g | 5% | 1.2 |

**Comparative Example**

Preparation of comparative binder

In a manner similar to that described for Binders Nos. 1-5 according to the present invention, a comparative binder is prepared from binder component A6 alone, i.e. no binder component (B) is used.

**Example 6**

Procedure for making gritbars

90 ml of binder solution adjusted to 15% solids are mixed with 450 g of shots. Out of the 450 g shots, 8 bars are made which are cured at 200°C for 2 hours.

On 4 of the bars, the 3-point bending strength is measured directly (dry strength), on the other 4 bars after aging by submersion of the bars in 80°C hot water for 3 hours (aged strength).

Moisture take-up

Approx. 0.5 g of binder solution having a solids content of about 25% (determined by curing at 200°C for 1 hour) is evenly spread over a quartz filter.

The filter is placed in a flash curing apparatus and cured at 225°C for 3 minutes at a differential pressure over the filter of 190 mm water column.

After curing, the filter is placed above 20-30 ml of ion-exchanged water in a plastic beaker with lid. The beaker is placed in a heating cupboard at 20°C, i.e. humidity conditions are 20°C, 100% RH.

The filter is weighed before application of binder, before and after curing in the flash curing apparatus and after 3, 6 and 10 days exposure in the humid atmosphere.

The amount of water absorbed can be determined from the above measurements. Normally, five filters of each binder to be tested are prepared, and the average result for each binder is determined.

Results from testing of the different binder compositions are shown in Fig. 1 and in Table 3 below.

Table 3

| Binder No. | 3-Point bending strength from gritbar testing | | Moisture take-up at 20°C, 100% RH mean $\pm 1\sigma$ |
|---|---|---|---|
| | Dry strength N/mm2 | Aged strength N/mm2 | |
| 1 | 7.5 | 3.3 | 12%$\pm$4 |
| 2 | 6.0 | 1.6 | 33%$\pm$15 |
| 3 | 7.7 | 2.2 | 19%$\pm$9 |
| 4 | 7.8 | 1.8 | 40%$\pm$17 |
| 5 | 6.7 | 2.4 | 12%$\pm$2 |
| Comparative | 7.6 | 2.5 | 10%$\pm$5 |

## Claims

1. An aqueous binder composition for mineral fibres comprising:

   a water-soluble binder component obtainable by reacting at least one alkanolamine with at least one carboxylic anhydride in proportions such that the ratio of equivalents of amine groups plus hydroxy groups (NH+OH), excluding urea, to equivalents of carboxy groups (COOH) in the binder component is within the range of from about 0.6 to about 1.5 and, optionally, treating the reaction product with a base; and

   urea in an amount of from about 1 to about 25 wt.%, based on solids of the binder composition;

   said alkanolamine, carboxylic anhydride and urea being employed in proportions such that the ratio of total equivalents of amine groups plus hydroxy groups (NH+OH), including urea, to equivalents of carboxy groups (COOH) in the binder composition is between and includes the following lower limit x and upper limit y:

$$x\ (\mathrm{min}) = \frac{(\mathrm{NH+OH})}{\mathrm{COOH}} = 0.04 \times \mathrm{wt.\%\ Urea} + 0.6$$

$$y\ (\mathrm{max}) = \frac{(\mathrm{NH+OH})}{\mathrm{COOH}} = 0.04 \times \mathrm{wt.\%\ Urea} + 1.5$$

2. The binder composition of claim 1, wherein the water-soluble binder component comprises the reaction product of at least one alkanolamine with at least one carboxylic anhydride in an equivalent ratio of amine and hydroxy groups (NH+OH), excluding urea, to carboxy groups (COOH) within the range of from about 0.8 to about 1.5.

3. The binder composition of claim 1 or 2, which comprises urea in an amount of from about 3 to about 17 wt.%, based on solids of the binder composition.

4. The binder composition of any one of claims 1 to 3, wherein at least one carboxylic anhydride is selected from cycloaliphatic and/or aromatic anhydrides.

5. The binder composition of claim 4, wherein the carboxylic anhydride comprises a combination of a cycloaliphatic and an aromatic anhydride.

6. The binder composition of 4 or 5, wherein the cycloaliphatic anhydride is selected from tetrahydrophthalic anhydride, hexahydrophthalic anhydride and methyl-tetrahydrophthalic anhydride.

7. The binder composition of any one of claims 4 to 6, wherein the aromatic anhydride is selected from phthalic anhydride, methylphthalic anhydride, trimellitic anhydride and pyromellitic dianhydride.

8. The binder composition of any one of claims 1 to 7, wherein the alkanolamine is selected from diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane.

9. The binder composition of any one of claims 1 to 8, further comprising a curing accelerator and, optionally, other conventional binder additives.

10. The binder composition of claim 9, which comprises phosphinic acid as a curing accelerator.

11. A method of producing a bonded mineral fibre product which comprises the steps of contacting the mineral fibres or mineral fibre product with a binder composition according to any one of claims 1 to 10, and curing the binder composition.

12. The method of claim 11 wherein curing is effected at a curing temperature of from about 225°C to about 300°C.

13. Mineral fibre product comprising mineral fibres in contact with the cured binder composition according to any one of claims 1 to 10.

FIG. 1

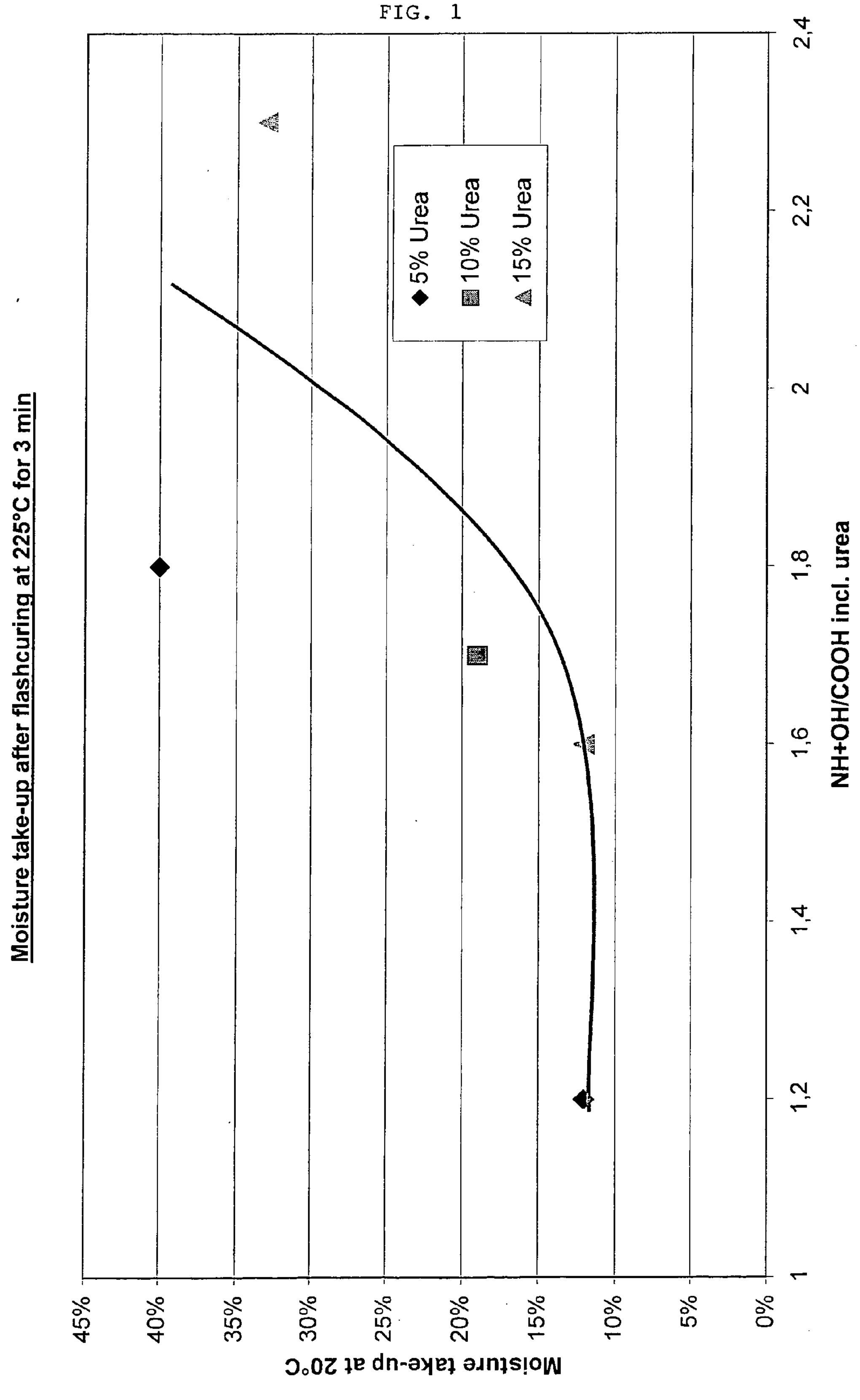
Moisture take-up after flashcuring at 225°C for 3 min
Moisture take-up at 20°C
45%
40%
35%
30%
25%
20%
15%
10%
5%
0%
1
1,2
1,4
1,6
1,8
2
2,2
2,4
NH+OH/COOH incl. urea
5% Urea
10% Urea
15% Urea

European Patent Office

# EUROPEAN SEARCH REPORT

Application Number
EP 06 01 7563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 669 396 A (ROCKWOOL INT [DK]) 14 June 2006 (2006-06-14) * abstract * ----- | 1-13 | INV. C03C25/32 C08J5/08 C08L77/12 D04H1/64 |
| Y | EP 1 382 642 A (ROCKWOOL INT [DK]) 21 January 2004 (2004-01-21) * abstract * ----- | 1-13 | |
| Y | EP 1 170 265 A (ROCKWOOL INT [DK]) 9 January 2002 (2002-01-09) * abstract * ----- | 1-13 | |

TECHNICAL FIELDS SEARCHED (IPC)

C03C
C08J
C08L
D04H

The present search report has been drawn up for all claims

1

| Place of search | Date of completion of the search | Examiner |
|---|---|---|
| The Hague | 17 January 2007 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 01 7563

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2007

| Patent document cited in search report | Publication date | Patent family member(s) | Publication date |
|---|---|---|---|
| EP 1669396 A | 14-06-2006 | NONE | |
| EP 1382642 A | 21-01-2004 | AT 319778 T | 15-03-2006 |
| | | AU 2003250055 A1 | 02-02-2004 |
| | | CA 2489817 A1 | 22-01-2004 |
| | | CN 1668700 A | 14-09-2005 |
| | | DE 60303949 T2 | 16-11-2006 |
| | | DK 1521807 T3 | 03-07-2006 |
| | | WO 2004007615 A1 | 22-01-2004 |
| | | ES 2259148 T3 | 16-09-2006 |
| | | HR 20041133 A2 | 30-06-2005 |
| | | JP 2005533145 T | 04-11-2005 |
| | | US 2006111480 A1 | 25-05-2006 |
| EP 1170265 A | 09-01-2002 | AU 8194801 A | 30-01-2002 |
| | | CA 2410672 A1 | 24-01-2002 |
| | | CN 1440372 A | 03-09-2003 |
| | | CZ 20024230 A3 | 14-01-2004 |
| | | WO 0206178 A1 | 24-01-2002 |
| | | HU 0301295 A2 | 28-08-2003 |
| | | JP 2004504503 T | 12-02-2004 |
| | | PL 361160 A1 | 20-09-2004 |
| | | US 2004024170 A1 | 05-02-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 583086 A
- EP 990727 A
- US 5318990 A
- WO 9936368 A
- WO 0105725 A
- WO 0196460 A
- WO 0206178 A
- WO 2004007615 A
- WO 2006061249 A